(19) Europäisches Patentamt / European Patent Office / Office européen des brevets

(11) **EP 4 113 898 A1**

(12) **DEMANDE DE BREVET EUROPEEN**

(43) Date de publication:
**04.01.2023 Bulletin 2023/01**

(21) Numéro de dépôt: **22181696.0**

(22) Date de dépôt: **28.06.2022**

(51) Classification Internationale des Brevets (IPC):
***H04L 9/32*** *(2006.01)*

(52) Classification Coopérative des Brevets (CPC):
**H04L 9/3278**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **30.06.2021 FR 2107112**

(71) Demandeurs:
• **Electricité de France**
**75008 Paris (FR)**
• **Institut Mines Telecom**
**91120 Palaiseau (FR)**

(72) Inventeurs:
• **KHALFAOUI, Sameh**
**91300 MASSY (FR)**
• **VILLARD, Arthur**
**91120 PALAISEAU (FR)**
• **MA, Jingxuan**
**78000 VERSAILLES (FR)**

(74) Mandataire: **Plasseraud IP**
**66, rue de la Chaussée d'Antin**
**75440 Paris Cedex 09 (FR)**

(54) **PROCÉDÉ ET SYSTÈME D AUTHENTIFICATION PAR UN ÉQUIPEMENT VÉRIFICATEUR D'UN DISPOSITIF À AUTHENTIFIER ÉQUIPÉ D'UN CIRCUIT PUF**

(57) La présente divulgation concerne un procédé (50) d'authentification d'un dispositif à authentifier par un équipement vérificateur, ledit dispositif à authentifier comportant un circuit PUF, ledit procédé comportant des étapes de :
- (S501) obtention d'un modèle PUF tatoué,
- (S502) obtention de défis déclencheurs pour lesquels le modèle PUF tatoué fournit des réponses différentes des réponses fournies par le circuit PUF,
- (S503) obtention de défis d'authentification pour lesquels le modèle PUF tatoué fournit les mêmes réponses que le circuit PUF,
- (S504) sélection d'un ordre d'envoi,
- (S505) transmission, à destination du dispositif à authentifier, des défis déclencheurs et des défis d'authentification selon l'ordre d'envoi sélectionné,
- (S506) génération, par le dispositif à authentifier, de réponses pour chaque défi reçu,
- (S507) transmission des réponses à destination de l'équipement vérificateur,
- (S508) vérification, par l'équipement vérificateur, de l'identité du dispositif à authentifier en fonction des réponses reçues.

Fig. 1

EP 4 113 898 A1

## Description

### Domaine technique

La présente invention concerne un procédé et un système d'authentification par un équipement vérificateur d'un dispositif à authentifier, par exemple un objet connecté, équipé d'un circuit électronique réalisant une fonction physique non reproductible.

### Technique antérieure

Lorsqu'un objet connecté cherche à rejoindre un réseau de communication, il est nécessaire de mettre en œuvre une authentification de cet objet connecté. Dans le contexte des objets connectés, une telle authentification est également désignée par enrôlement (« device enrollment » dans la littérature anglo-saxonne). Une telle authentification permet de vérifier l'origine et d'autres informations de l'objet connecté afin d'éviter qu'un tiers malveillant puisse avoir accès au réseau de communication.

Selon l'état de l'art, il existe de nombreux protocoles d'authentification qui sont basés sur le fait d'équiper chaque objet connecté devant s'authentifier d'un circuit électronique réalisant une fonction physique non reproductible (« physical unclonable function » ou PUF dans la littérature anglo-saxonne). Un tel circuit électronique est désigné par « circuit PUF » dans toute la présente divulgation. Un tel circuit PUF est un circuit qui identifie de manière unique l'objet connecté qui en est équipé, en fournissant en sortie des réponses spécifiques associées respectivement à des défis (« challenge » dans la littérature anglo-saxonne) particuliers reçus en entrée dudit circuit PUF. La fonction ainsi réalisée par un circuit PUF, qui donne en sortie la réponse binaire associée à un défi (séquence de bits) reçu en entrée, doit être unique pour chaque objet connecté.

Les protocoles d'authentification qui reposent sur un circuit PUF utilisent un ensemble prédéfini de paires défi-réponse (« challenge-response pairs » ou CRP dans la littérature anglo-saxonne) qui sont généralement imposés par le fabricant du circuit PUF.

Cependant, ces techniques ne sont pas adaptées dans le cas de multiples tentatives d'authentification d'un même objet connecté au cours de son cycle de vie par plusieurs utilisateurs, car ces CRPs seront réutilisées, ce qui pourrait conduire à des attaques par rejeu. Il faut donc prévoir un plus grand nombre de CRPs pour chaque objet connecté, pour pouvoir varier les CRPs utilisés d'une authentification à une autre.

Toutefois, avec le nombre croissant d'objets connectés déployés, la nécessité de stocker un grand nombre de CRPs pour chaque objet connecté augmentera de manière exponentielle l'espace de stockage de données requis pour les paramètres d'authentification (CRPs) de tous les objets connectés.

Afin de réduire la quantité de données à stocker, il a été proposé d'utiliser un modèle du circuit PUF, qui est désigné ci-après par « modèle PUF ». Un tel modèle PUF est un modèle numérique qui permet de simuler la fonction du circuit PUF et doit en principe fournir la même réponse à un défi donné que le circuit PUF, au moins avec une forte probabilité (par exemple égale ou supérieure à 98%. Typiquement, un tel modèle PUF est fourni par le fabricant du circuit PUF, et peut être obtenu par exemple par apprentissage supervisé à partir des CRPs obtenus avec les réponses fournies par le circuit PUF auxquelles le fabricant a initialement accès.

Toutefois, il va de soi que si le comportement d'un circuit PUF peut être modélisé par un modèle PUF, la génération d'un tel modèle PUF peut également être envisagée par un tiers malveillant qui aurait accès à un nombre suffisant de CRPs. En outre, il n'est à ce jour pas possible de conclure avec certitude qu'une architecture donnée de circuit PUF serait immunisée contre ce type d'attaques de modélisation par apprentissage automatique. L'utilisation d'un modèle PUF d'un circuit PUF pour réaliser l'authentification d'un objet connecté intégrant ce circuit PUF est en soi une admission que les réponses du circuit PUF pourraient être prédites par un tiers malveillant qui aurait suffisamment de CRPs et la puissance de calcul nécessaire pour construire un modèle PUF.

En outre, certaines attaques peuvent être basées sur le fait qu'un tiers malveillant obtiendrait une copie du modèle PUF utilisé pour l'authentification, de sorte qu'il serait souhaitable de proposer une solution robuste aux attaques même dans le cas où une copie du modèle PUF du circuit PUF serait obtenue par un tiers malveillant.

### Résumé

La présente divulgation a pour objectif de remédier à tout ou partie des limitations des solutions de l'art antérieur, notamment celles exposées ci-avant, en proposant une solution qui permette d'améliorer la sécurité d'un procédé d'authentification basé sur l'utilisation d'un circuit PUF au niveau d'un dispositif à authentifier, tel qu'un objet connecté, et d'un modèle PUF au niveau d'un équipement vérificateur, en charge de l'authentification du dispositif à authentifier.

En outre, la présente divulgation vise à proposer une solution qui soit robuste aux attaques même dans le cas où une copie du modèle PUF du circuit PUF serait obtenue par un tiers malveillant, au moins dans certains modes de réalisation.

En outre, la présente divulgation vise à proposer une solution qui puisse être mise en œuvre par une simple mise à jour logicielle au niveau de l'objet connecté à authentifier, sans avoir à remplacer le circuit PUF intégré dans cet objet connecté.

A cet effet, la présente divulgation concerne un procédé d'authentification d'un dispositif à authentifier par un équipement vérificateur, ledit dispositif à authentifier comportant un circuit électronique réalisant une fonction physique non reproductible, dit circuit PUF, ledit circuit PUF étant configuré pour recevoir en entrée un défi et à fournir en sortie une réponse au défi reçu en entrée, ledit procédé étant caractérisé en ce qu'il comporte des étapes de :

- obtention, par l'équipement vérificateur, d'un modèle adapté à simuler de manière approximative le comportement du circuit PUF, dit modèle PUF tatoué,
- obtention, par l'équipement vérificateur, de défis, dits défis déclencheurs, pour lesquels le modèle PUF tatoué fournit des réponses différentes des réponses fournies par le circuit PUF,
- obtention, par l'équipement vérificateur, de défis, dits défis d'authentification, pour lesquels le modèle PUF tatoué fournit les mêmes réponses que le circuit PUF,
- sélection, par l'équipement vérificateur, d'un ordre d'envoi des défis déclencheurs et des défis d'authentification,
- transmission, par l'équipement vérificateur à destination du dispositif à authentifier, des défis déclencheurs et des défis d'authentification selon l'ordre d'envoi sélectionné,
- génération, par le circuit PUF du dispositif à authentifier, de réponses pour chaque défi reçu de l'équipement vérificateur,
- transmission, par le dispositif à authentifier, des réponses générées à destination de l'équipement vérificateur,
- vérification, par l'équipement vérificateur, de l'identité du dispositif à authentifier en fonction des réponses reçues, du modèle PUF tatoué, des défis déclencheurs, des défis d'authentification et de l'ordre d'envoi.

Ainsi, le procédé d'authentification utilise un modèle PUF tatoué, qui correspond à un modèle qui simule le comportement du circuit PUF de manière approximative. Par de « manière approximative », on entend que ledit modèle PUF tatoué fournit les mêmes réponses que celles fournies par le circuit PUF pour certains défis, mais fournit des réponses différentes de celles fournies par le circuit PUF pour d'autres défis. Le niveau de précision dudit modèle PUF tatoué dépend donc de la proportion de défis, parmi l'ensemble de tous les défis possibles (ou parmi un ensemble représentatif de défis possibles différents comportant par exemple plusieurs dizaines de milliers ou plusieurs centaines de milliers de défis possibles différents, voire davantage), pour lesquels ledit modèle PUF tatoué fournit des réponses différentes de celles fournies par le circuit PUF.

Du fait que l'équipement vérificateur utilise un modèle PUF tatoué, le risque lié au fait qu'un tiers malveillant pourrait obtenir une copie dudit modèle PUF tatoué est en soi limité du fait même que ledit modèle PUF tatoué ne modélise qu'approximativement le circuit PUF. En outre, en déterminant a priori les défis pour lesquels le modèle PUF tatoué fournit une réponse erronée (différente de celle fournie par le circuit PUF), un tiers malveillant qui utiliserait les réponses fournies par une copie du modèle PUF tatoué pour essayer de s'authentifier auprès de l'équipement vérificateur pourra être aisément détecté.

Afin de renforcer la sécurité liée à l'utilisation du modèle PUF tatoué pour réaliser l'authentification, l'équipement vérificateur envoie à fois des défis déclencheurs, c'est-à-dire des défis pour lesquels l'équipement vérificateur sait que le modèle PUF tatoué fournit des réponses différentes de celles du circuit PUF, et des défis d'authentification, c'est-à-dire des défis pour lesquels l'équipement vérificateur sait que le modèle PUF tatoué fournit les mêmes réponses que celles du circuit PUF (de manière certaine ou avec une forte probabilité, comme cela sera expliqué plus loin).

Pour la transmission des défis déclencheurs et des défis d'authentification, l'équipement vérificateur sélectionne un ordre d'envoi, de préférence de manière aléatoire. L'ordre d'envoi est sélectionné de manière unilatérale par l'équipement vérificateur et n'est donc pas connu du dispositif à authentifier ni transmis à celui-ci. Ainsi, ni le dispositif à authentifier ni un tiers malveillant qui écouterait les échanges entre l'équipement vérificateur et le dispositif à authentifier ne sont capables de distinguer les défis déclencheurs des défis d'authentification.

Le dispositif à authentifier, qui dispose du circuit PUF, fournit les réponses attendues aux défis reçus, sans se préoccuper du type de défi reçu dont il n'a pas connaissance. Le fonctionnement du dispositif à authentifier n'a donc pas nécessairement besoin d'être modifié.

Un tiers malveillant qui disposerait d'une copie du modèle PUF tatoué, ne pourra pas s'authentifier auprès de l'équipement vérificateur car il fournira des réponses erronées, par rapport au circuit PUF, aux défis déclencheurs. Ceci peut être détecté par l'équipement vérificateur car, même s'il ne dispose pas du circuit PUF ou d'un modèle plus précis que le modèle PUF tatoué, il sait quels sont les défis déclencheurs et les réponses erronées fournies par le modèle PUF tatoué dont il dispose. Etant donné que les réponses sont binaires, il suffit donc à l'équipement vérificateur d'inverser la réponse erronée pour avoir la réponse correcte.

Dans des modes particuliers de réalisation, le procédé d'authentification peut comporter en outre, de manière optionnelle, l'une ou plusieurs des caractéristiques suivantes, prises isolément ou selon toutes les combinaisons techniquement possibles.

Dans des modes particuliers de mise en œuvre, un serveur d'authentification transmet le modèle PUF tatoué à l'équipement vérificateur, le modèle PUF tatoué étant généré par le serveur d'authentification à partir d'un modèle adapté à simuler de manière précise le comportement du circuit PUF, dit modèle PUF précis.

De telles dispositions sont avantageuses en ce que le modèle PUF précis est connu uniquement du serveur d'authentification et n'est pas transmis à l'équipement vérificateur. Par « précis », on entend que le modèle PUF précis simule de manière plus précise le comportement du circuit PUF que le modèle PUF tatoué. En d'autres termes, le modèle PUF précis donne des réponses différentes du circuit PUF pour moins de défis que le modèle PUF tatoué, de préférence pour beaucoup moins de défis que le modèle PUF tatoué. Le modèle PUF précis peut également être complètement fidèle au circuit PUF, c'est-à-dire qu'aucun défi ne donne une réponse différente de celle fournie par le circuit PUF. Ce qui importe, c'est qu'il existe des défis qui donnent des réponses erronées avec le modèle PUF tatoué mais qui donnent des réponses correctes avec le modèle PUF précis. Le modèle PUF précis est par exemple établi par un fabricant du circuit PUF, par apprentissage supervisé en utilisant des paires défis-réponses générées en utilisant directement le circuit PUF auquel il a initialement accès.

Dans des modes particuliers de mise en œuvre, le modèle PUF tatoué est généré par apprentissage supervisé à partir de paires défi-réponse générées en utilisant le modèle PUF précis.

Dans des modes particuliers de mise en œuvre, le serveur d'authentification transmet les défis déclencheurs à l'équipement vérificateur.

Si le serveur d'authentification a accès au modèle PUF tatoué et au modèle PUF précis, il peut facilement identifier des défis déclencheurs en comparant les réponses fournies pour un défi donné par le modèle PUF tatoué et le modèle PUF précis. Les défis d'authentification peuvent être établis par le serveur d'authentification ou par l'équipement vérificateur.

Dans des modes particuliers de mise en œuvre, le serveur d'authentification conserve un historique des défis déclencheurs transmis, de préférence au moyen d'un filtre de Bloom évolutif, afin de faire varier les défis déclencheurs transmis d'une authentification du dispositif à authentifier à une autre. De telles dispositions sont avantageuses en ce qu'elles limitent les possibilités d'attaques par rejeu.

Dans des modes particuliers de mise en œuvre, le modèle PUF tatoué fournit une valeur de vraisemblance pour chaque réponse prédite à partir d'un défi, et chaque défi déclencheur est un défi dont la valeur de vraisemblance de la réponse vérifie un critère de vraisemblance prédéterminé.

Dans des modes particuliers de mise en œuvre, l'évaluation du critère de vraisemblance pour la valeur de vraisemblance fournie par le modèle PUF tatoué en réponse à un défi comporte une comparaison de ladite valeur de vraisemblance avec une valeur de vraisemblance fournie par le modèle PUF précis en réponse au même défi.

Dans des modes particuliers de mise en œuvre, les défis d'authentification sont sélectionnés en fonction d'une distribution des valeurs de vraisemblance des réponses des défis déclencheurs.

Ainsi, les défis d'authentification peuvent être sélectionnés de sorte à avoir des réponses dont les valeurs de vraisemblance présentent sensiblement la même distribution que celles des réponses des défis déclencheurs. De telles dispositions permettent d'éviter qu'un tiers malveillant qui aurait accès à une copie du modèle PUF tatoué puisse distinguer les défis déclencheurs et les défis d'authentification en analysant les valeurs de vraisemblance des réponses fournies par le modèle PUF tatoué pour les différents défis.

Dans des modes particuliers de mise en œuvre, l'ordre d'envoi est tel que les défis transmis sont groupés en paires, chaque paire de défis transmis comportant un défi déclencheur et un défi d'authentification, l'ordre d'envoi du défi déclencheur et du défi d'authentification de chaque paire étant sélectionné de manière aléatoire d'une paire à une autre.

Dans des modes particuliers de mise en œuvre, le procédé d'authentification comporte une étape d'obfuscation, par le dispositif à authentifier, des réponses générées transmises à l'équipement vérificateur.

De telles dispositions permettent d'éviter qu'un tiers malveillant, qui disposerait d'une copie du modèle PUF tatoué et qui écouterait les réponses transmises par le dispositif à authentifier, puisse identifier les défis déclencheurs en comparant les réponses fournies par sa copie du modèle PUF tatoué avec celles transmises par le dispositif à authentifier. Dans un tel cas, le fonctionnement du dispositif à authentifier peut éventuellement être modifié, mais une simple mise à jour logicielle à distance peut suffire.

Dans des modes particuliers de mise en œuvre, l'obfuscation consiste à regrouper les défis reçus en paires successives, et à combiner les réponses générées pour chaque paire de défis reçus au moyen d'un opérateur logique de type « OU EXCLUSIF ».

Dans des modes particuliers de mise en œuvre, le dispositif à authentifier conserve un historique des défis reçus, de préférence au moyen d'un filtre de Bloom évolutif, afin de vérifier que des défis différents sont reçus d'une authentification à une autre. De telles dispositions sont avantageuses en ce qu'elles limitent les possibilités d'attaques par rejeu.

Dans des modes particuliers de mise en œuvre, le modèle PUF tatoué est basé sur un réseau de neurones, de préférence un perceptron multicouches, ou sur un modèle de régression logistique.

Selon un deuxième aspect, il est proposé un produit programme d'ordinateur comportant un ensemble d'instructions de code de programme qui, lorsqu'elles sont exécutées par un processeur, configurent ledit processeur pour mettre en œuvre tout ou partie des étapes d'un procédé d'authentification selon l'un quelconque des modes de mise en œuvre de la présente divulgation.

Selon un troisième aspect, il est proposé un support d'enregistrement lisible par un ordinateur sur lequel est enregistré un ensemble d'instructions de code de programme qui, lorsqu'elles sont exécutées par un processeur, configurent ledit processeur pour mettre en œuvre tout ou partie des étapes d'un procédé d'authentification selon l'un quelconque des modes de mise en œuvre de la présente divulgation.

Selon un quatrième aspect, la présente divulgation concerne un équipement vérificateur pour l'authentification d'un dispositif à authentifier, ledit dispositif à authentifier comportant un circuit électronique réalisant une fonction physique non reproductible, dit circuit PUF, ledit circuit PUF étant configuré pour recevoir en entrée un défi et à fournir en sortie une réponse au défi reçu en entrée, ledit équipement vérificateur étant caractérisé en ce qu'il comporte un circuit de traitement configuré pour :

- obtenir un modèle adapté à simuler de manière approximative le comportement du circuit PUF, dit modèle PUF tatoué,
- obtenir des défis, dits défis déclencheurs, pour lesquels le modèle PUF tatoué fournit des réponses différentes des réponses fournies par le circuit PUF,
- obtenir des défis, dits défis d'authentification, pour lesquels le modèle PUF tatoué fournit les mêmes réponses que le circuit PUF,
- sélectionner un ordre d'envoi des défis déclencheurs et des défis d'authentification,
- transmettre à destination du dispositif à authentifier les défis déclencheurs et les défis d'authentification selon l'ordre d'envoi sélectionné,
- vérifier l'identité du dispositif à authentifier en fonction des réponses reçues du dispositif à authentifier, du modèle PUF tatoué, des défis déclencheurs, des défis d'authentification et de l'ordre d'envoi.

Selon un cinquième aspect, la présente divulgation concerne un système d'authentification comportant :

- un dispositif à authentifier comportant un circuit électronique réalisant une fonction physique non reproductible, dit circuit PUF, ledit circuit PUF étant configuré pour recevoir en entrée un défi et à fournir en sortie une réponse au défi reçu en entrée,
- un équipement vérificateur selon l'un quelconque des modes de réalisation de la présente divulgation.

Dans des modes particuliers de réalisation, le système d'authentification comporte un serveur d'authentification configuré pour générer le modèle PUF tatoué à partir d'un modèle adapté à simuler de manière précise le comportement du circuit PUF, dit modèle PUF précis, et pour transmettre le modèle PUF tatoué à l'équipement vérificateur.

**Brève description des dessins**

L'invention sera mieux comprise à la lecture de la description suivante, donnée à titre d'exemple nullement limitatif, et faite en se référant aux figures qui représentent :

Figure 1 : un diagramme illustrant les principales étapes d'un exemple de mise en œuvre d'un procédé d'authentification ;
Figure 2 : un diagramme illustrant les principales étapes d'un premier mode préféré de mise en œuvre d'un procédé d'authentification ;
Figure 3 : un diagramme illustrant les principales étapes d'un second mode préféré de mise en œuvre d'un procédé d'authentification ;
Figure 4 : une représentation schématique de valeurs de vraisemblance de réponses fournies par un modèle PUF tatoué ;
Figure 5 : une représentation schématique de valeurs de vraisemblance de réponses fournies par le modèle PUF tatoué pour des défis déclencheurs sélectionnés selon un mode préféré de mise en œuvre ;
Figure 6 : une représentation schématique de valeurs de vraisemblance de réponses fournies par le modèle PUF tatoué pour des défis d'authentification sélectionnés selon un mode préféré de mise en œuvre.

**Description des modes de réalisation**

Tel qu'indiqué précédemment, la présente divulgation concerne l'authentification d'un dispositif à authentifier 10 par un équipement vérificateur 20.

Le dispositif à authentifier 10 peut être tout type d'équipement adapté à émettre et à recevoir des données d'authentification sur un canal de communication, de préférence sans fil. Le dispositif à authentifier 10 est par exemple un objet connecté.

Le dispositif à authentifier 10 comporte par exemple un circuit de traitement (non représenté sur les figures) comportant un ou plusieurs processeurs et des moyens de mémorisation (disque dur magnétique, mémoire électronique, disque optique, ou tout type de support d'enregistrement lisible par ordinateur) dans lesquels est mémorisé un produit programme d'ordinateur, sous la forme d'un ensemble d'instructions de code de programme à exécuter pour mettre en œuvre les différentes étapes du procédé 50 d'authentification mises en œuvre par ledit dispositif à authentifier. Alternativement ou en complément, le circuit de traitement du dispositif à authentifier 10 peut comporter un ou des circuits logiques programmables (FPGA, PLD, etc.), et/ou un ou des circuits intégrés spécialisés (ASIC, etc.), et/ou un ensemble de composants électroniques discrets, etc., adaptés à effectuer tout ou partie desdites étapes.

En outre, le dispositif à authentifier 10 est équipé d'un circuit électronique réalisant une fonction physique non reproductible, dit circuit PUF. Le circuit PUF est configuré pour recevoir en entrée un défi et à fournir en sortie une réponse spécifique au défi reçu en entrée. Le défi se présente typiquement sous la forme d'une séquence de bits, comportant un nombre $N_b$ prédéterminé de bits (par exemple $N_b$ = 64 ou $N_b$ = 128). La réponse correspondante est binaire, et correspond donc à un bit. L'ensemble des paires défi-réponse est en principe spécifique à un circuit PUF, et les ensembles de défis-réponses de deux circuits PUFs différents sont en principe différents.

En outre, le dispositif à authentifier 10 comporte un circuit de communication (non représenté sur les figures), par exemple sans fil, par l'intermédiaire duquel ledit dispositif à authentifier 10 peut émettre et recevoir des données sur le canal de communication, pour échanger des données avec l'équipement vérificateur 20.

En d'autres termes, le circuit de traitement, le circuit PUF et le circuit de communication du dispositif à authentifier 10 sont configurés de façon logicielle (produit programme d'ordinateur spécifique) et/ou matérielle (FPGA, PLD, ASIC, composants électroniques discrets, etc.) pour exécuter les différentes étapes du procédé 50 d'authentification mises en œuvre par le dispositif à authentifier 10.

De manière analogue, l'équipement vérificateur 20 peut être tout type d'équipement adapté à échanger des données d'authentification avec le dispositif à authentifier 10, via le canal de communication. L'équipement vérificateur 20 est par exemple un terminal mobile, tel qu'un smartphone, d'un utilisateur qui souhaite enrôler le dispositif à authentifier 10.

L'équipement vérificateur 20 comporte par exemple un circuit de traitement (non représenté sur les figures) comportant un ou plusieurs processeurs et des moyens de mémorisation (disque dur magnétique, mémoire électronique, disque optique, ou tout type de support d'enregistrement lisible par ordinateur) dans lesquels est mémorisé un produit programme d'ordinateur, sous la forme d'un ensemble d'instructions de code de programme à exécuter pour mettre en œuvre les différentes étapes du procédé 50 d'authentification mises en œuvre par ledit équipement vérificateur. Alternativement ou en complément, le circuit de traitement de l'équipement vérificateur 20 peut comporter un ou des circuits logiques programmables (FPGA, PLD, etc.), et/ou un ou des circuits intégrés spécialisés (ASIC, etc.), et/ou un ensemble de composants électroniques discrets, etc., adaptés à effectuer tout ou partie desdites étapes.

En outre, l'équipement vérificateur 20 comporte un circuit de communication (non représenté sur les figures), par exemple sans fil, par l'intermédiaire duquel ledit équipement vérificateur 20 peut échanger des données avec le dispositif à authentifier 10 via le canal de communication.

En d'autres termes, le circuit de traitement et le circuit de communication de l'équipement vérificateur 20 sont configurés de façon logicielle (produit programme d'ordinateur spécifique) et/ou matérielle (FPGA, PLD, ASIC, composants électroniques discrets, etc.) pour exécuter les différentes étapes du procédé 50 d'authentification mises en œuvre par l'équipement vérificateur 20.

Le principe général de l'authentification par circuit PUF repose sur :

- l'envoi de défis par l'équipement vérificateur 20 à destination du dispositif à authentifier 10 équipé du circuit PUF,
- l'envoi des réponses générées par le circuit PUF à destination de l'équipement vérificateur 20, et
- la vérification par l'équipement vérificateur 20 que les réponses reçues correspondent bien aux réponses attendues.

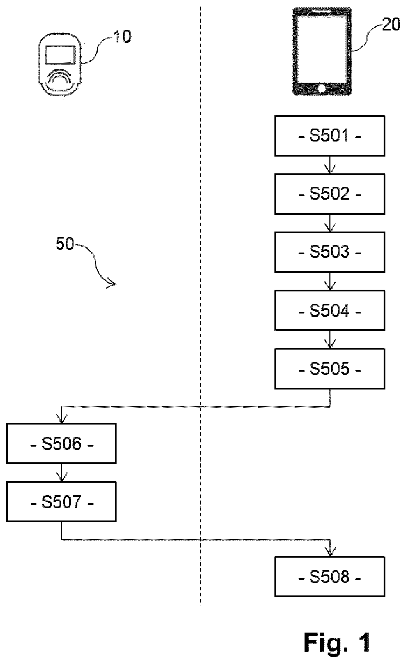

La figure 1 représente schématiquement les principales étapes d'un procédé 50 d'authentification d'un dispositif à authentifier 10 équipé d'un circuit PUF.

Tel qu'illustré par la figure 1, le procédé 50 d'authentification comporte une étape S501 d'obtention, par l'équipement vérificateur 20, d'un modèle adapté à simuler de manière approximative le comportement du circuit PUF, dit modèle PUF tatoué.

Tel qu'indiqué précédemment, le modèle PUF tatoué fournit les mêmes réponses que celles fournies par le circuit PUF pour certains défis, mais fournit des réponses différentes de celles fournies par le circuit PUF pour d'autres défis. Le niveau de précision dudit modèle PUF tatoué dépend donc de la proportion de défis, parmi l'ensemble des défis possibles, pour lesquels ledit modèle PUF tatoué fournit des réponses différentes de celles fournies par le circuit PUF.

Le modèle PUF tatoué doit être utilisé par l'équipement vérificateur 20 pour vérifier les réponses qui seront reçues du dispositif à authentifier 10. Toutefois, sans information supplémentaire, l'équipement vérificateur 20 (ou un tiers malveillant qui aurait obtenu une copie du modèle PUF tatoué) ne peut pas savoir de manière certaine si la réponse fournie par le modèle PUF tatoué à un défi donné est correcte ou non.

Tel qu'illustré par la figure 1, le procédé 50 d'authentification comporte également une étape S502 d'obtention, par l'équipement vérificateur 20, de défis, dits défis déclencheurs, pour lesquels le modèle PUF tatoué fournit des réponses différentes des réponses fournies par le circuit PUF.

A l'issue de cette étape S502 d'obtention, l'équipement vérificateur 20 dispose donc de défis déclencheurs pour lesquels il sait que la réponse fournie par le modèle PUF tatoué est erronée, c'est-à-dire différente de celle fournie par le circuit PUF du dispositif à authentifier 10. La réponse étant binaire, l'équipement vérificateur 20 est donc capable, en utilisant le modèle PUF tatoué, de déterminer la réponse correcte qui sera fournie par le circuit PUF, en inversant la réponse fournie par le modèle PUF tatoué. Ainsi, si la réponse fournie par le modèle PUF tatoué à un défi déclencheur est égale à 1, alors l'équipement vérificateur 20 sait que la réponse correcte qui sera fournie par le circuit PUF du dispositif à authentifier 10 est égale à 0 (et inversement).

Par exemple, le modèle PUF tatoué et les défis déclencheurs peuvent être reçus d'un équipement distinct, tel qu'un serveur d'authentification 30.

Le procédé 50 d'authentification comporte également une étape S503 d'obtention, par l'équipement vérificateur 20, de défis, dits défis d'authentification, pour lesquels le modèle PUF tatoué fournit les mêmes réponses que le circuit PUF.

A l'issue de cette étape S503 d'obtention, l'équipement vérificateur 20 dispose donc de défis d'authentification pour lesquels il peut supposer que la réponse fournie par le modèle PUF tatoué est correcte, c'est-à-dire identique à celle fournie par le circuit PUF du dispositif à authentifier 10. De tels défis d'authentification peuvent être reçus du même équipement distinct que le modèle PUF tatoué et les défis déclencheurs, auquel cas l'équipement vérificateur 20 peut éventuellement être certain que les réponses fournies par le modèle PUF tatoué aux défis d'authentification sont identiques à celles fournies par le circuit PUF du dispositif à authentifier 10. Toutefois, le modèle PUF tatoué, bien qu'imprécis, peut néanmoins modéliser le comportement du circuit PUF avec une précision assez élevée. Ce sera par exemple le cas si le nombre de défis pour lesquels le modèle PUF tatoué fournit une réponse correcte est significativement plus grand que le nombre de défis pour lesquels ledit modèle PUF tatoué fournit une réponse erronée. Ce sera par exemple le cas si le modèle PUF tatoué fournit des réponses correctes pour plus de 90% des défis, voire pour plus de 95% des défis. Si le modèle PUF tatoué peut être considéré comme ayant une précision assez élevée, les défis d'authentification peuvent également être sélectionnés par l'équipement vérificateur 20, par exemple de manière aléatoire, dans l'ensemble des défis restants (c'est-à-dire tous les défis qui sont différents des défis déclencheurs obtenus à l'étape S502). Pour des défis d'authentification ainsi sélectionnés, la probabilité pour que la réponse fournie par le modèle PUF tatoué soit correcte peut donc être considérée comme élevée.

A l'issue des étapes S501, S502 et S503, l'équipement vérificateur 20 dispose du modèle PUF tatoué, de défis déclencheurs pour lesquels l'équipement vérificateur 20 sait que le modèle PUF tatoué fournit des réponses erronées, et de défis d'authentification pour lesquels l'équipement vérificateur 20 sait que le modèle PUF tatoué fournit des réponses correctes (au moins avec une forte probabilité). Il est à noter que l'ordre d'exécution des étapes représenté sur les figures est donné à titre d'exemple non limitatif, et on comprend notamment que les étapes S501, S502 et S503 peuvent être exécutées dans un ordre différent sans que le procédé 50 d'authentification ne soit modifié dans son principe.

De préférence, l'équipement vérificateur 20 dispose à l'issue des étapes S502 et S503 d'autant de défis déclencheurs que de défis d'authentification, c'est-à-dire que le nombre $N_{dd}$ de défis déclencheurs est égal au nombre $N_{da}$ de défis d'authentification, $N_{dd} = N_{da} = N_d/2$, $N_d$ étant le nombre total de défis ainsi obtenus $N_d = N_{dd} + N_{da}$.

Le procédé 50 d'authentification comporte également une étape S504 de sélection, par l'équipement vérificateur 20, d'un ordre d'envoi des défis déclencheurs et des défis d'authentification. L'ordre d'envoi est par exemple choisi de manière aléatoire. L'ordre d'envoi est de préférence modifié d'une authentification à une autre, qu'il s'agisse d'une nouvelle authentification du même dispositif à authentifier 10 ou d'une authentification d'un autre dispositif à authentifier.

Il est à noter que l'ordre d'envoi est sélectionné de manière unilatérale par l'équipement vérificateur 20. Cet ordre d'envoi n'est donc pas connu du dispositif à authentifier 10 ni transmis à celui-ci. Ainsi, ni le dispositif à authentifier 10 ni un tiers malveillant qui écouterait les échanges entre l'équipement vérificateur 20 et le dispositif à authentifier 10 ne sont capables de distinguer les défis déclencheurs des défis d'authentification.

Dans le cas où le nombre $N_{dd}$ de défis déclencheurs est égal au nombre $N_{da}$ de défis d'authentification, l'ordre d'envoi peut être sélectionné de sorte que les $N_d$ défis transmis sont groupés en $N_d/2$ paires, chaque paire $P_i = \left\{ C_{dd}^i, C_{da}^i \right\}$ (1 ≤ i ≤ $N_d$/2) de défis transmis comportant un défi déclencheur $C_{dd}^i$ et un défi d'authentification $C_{da}^i$. Au sein d'une même paire, l'ordre d'envoi du défi déclencheur et du défi d'authentification est par exemple sélectionné de manière aléatoire, de sorte que l'ordre d'envoi du défi déclencheur et du défi d'authentification de chaque paire varie de manière aléatoire d'une paire à une autre. Les paires $P_i = \left\{ C_{dd}^i, C_{da}^i \right\}$ ainsi formées sont par exemple transmises successivement, et l'équipement vérificateur 20 sélectionne de manière aléatoire, pour chaque paire $P_i$, quel défi parmi les défis $C_{dd}^i$ et $C_{da}^i$ est transmis en premier.

Le procédé 50 d'authentification comporte également une étape S505 de transmission, par l'équipement vérificateur 20 et à destination du dispositif à authentifier 10, des défis déclencheurs et des défis d'authentification selon l'ordre d'envoi sélectionné.

Le procédé 50 d'authentification comporte également une étape S506 de génération, par le circuit PUF du dispositif à authentifier 10, de réponses pour chaque défi reçu de l'équipement vérificateur 20. Le dispositif à authentifier 10 se contente donc de générer une réponse à chaque défi, sans distinction entre défis déclencheurs et défis d'authentification, que le dispositif à authentifier 10 n'est pas capable de distinguer.

Le procédé 50 d'authentification comporte également une étape S507 de transmission, par le dispositif à authentifier 10, des réponses générées à destination de l'équipement vérificateur 20 sans changer l'ordre par rapport à l'ordre dans lequel ils ont été reçus, ou bien en changeant l'ordre mais d'une manière prédéterminée, connue a *priori* de l'équipement vérificateur 20 ou déterminable par celui-ci.

Le procédé 50 d'authentification comporte également une étape S508 de vérification, par l'équipement vérificateur 20, de l'identité du dispositif à authentifier 10 en fonction des réponses reçues, du modèle PUF tatoué, des défis déclencheurs, des défis d'authentification et de l'ordre d'envoi.

Du fait que l'équipement vérificateur 20 connaît l'ordre d'envoi des défis déclencheurs et des défis d'authentification, il est capable d'attribuer les réponses reçues aux différents défis qu'il a transmis au dispositif à authentifier 10.

En outre, l'équipement vérificateur 20 peut utiliser le modèle PUF tatoué pour déterminer les réponses correctes attendues comme suit :

- pour un défi déclencheur, la réponse fournie par le modèle PUF tatoué est inversée, et
- pour un défi d'authentification, la réponse fournie par le modèle PUF tatoué est considérée comme correcte.

Par conséquent, l'équipement vérificateur 20 peut vérifier l'identité du dispositif à authentifier en comparant les réponses reçues aux réponses correctes attendues.

Dans cette comparaison, l'équipement vérificateur 20 peut tenir compte du fait que le modèle PUF tatoué peut ne donner une réponse correcte à un défi d'authentification qu'avec une forte probabilité, comme décrit précédemment. Dans un tel cas, il est avantageux d'envoyer un nombre important de défis d'authentification au dispositif à authentifier 10, pour avoir une proportion statistiquement faible de défis d'authentification pour lesquels le modèle PUF tatoué fournira une réponse erronée.

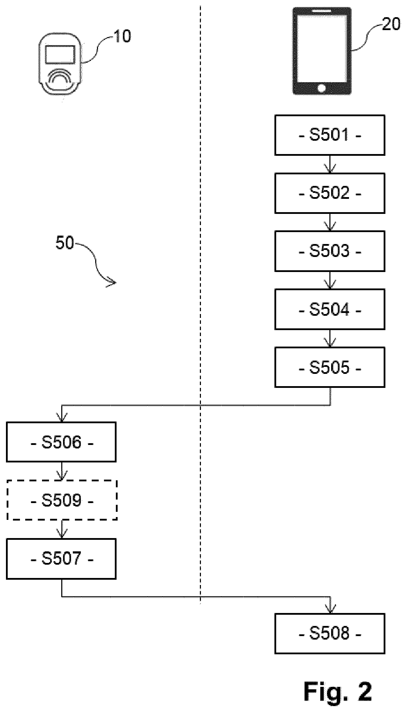

La figure 2 représente schématiquement les principales étapes d'un mode préféré de mise en œuvre du procédé 50 d'authentification. Outre les étapes décrites en référence à la figure 1, le procédé 50 d'authentification comporte une étape S509 d'obfuscation, par le dispositif à authentifier 10, des réponses générées transmises à l'équipement vérificateur 20.

Cette étape S509 d'obfuscation, optionnelle, vise à brouiller les réponses transmises par le dispositif à authentifier 10, pour éviter qu'un tiers malveillant, qui disposerait d'une copie du modèle PUF tatoué et qui écouterait les réponses transmises par le dispositif à authentifier 10, puisse identifier les défis déclencheurs en comparant les réponses fournies par sa copie du modèle PUF tatoué avec celles transmises par le dispositif à authentifier 10.

De manière générale, toute méthode permettant de brouiller les réponses transmises par le dispositif à authentifier 10 peut être mise en œuvre, et le choix d'un type particulier de méthode de brouillage (obfuscation) ne constitue qu'une variante d'implémentation de la présente divulgation. Dans le cas décrit ci-avant où les défis transmis par l'équipement vérificateur 20 et reçus par le dispositif à authentifier 10 sont regroupés en paires $P_i = \left\{ C_{dd}^i, C_{da}^i \right\}$, alors l'obfuscation peut comporter le fait de combiner les réponses générées pour chaque paire de défis reçus au moyen d'un opérateur logique de type « OU EXCLUSIF ». Ainsi, le dispositif à authentifier 10 peut transmettre à l'équipement vérificateur 20 des réponses $\alpha_i$ (1 ≤ i ≤ $N_d$/2) obtenues comme suit :

$$\alpha_i = R_{dd}^i \oplus R_{da}^i$$

expression dans laquelle :

- $R_{dd}^i = PUF\left(C_{dd}^i\right)$ correspond à la réponse fournie par le circuit PUF au défi $C_{dd}^i$ ;

- $R_{da}^i = PUF\left(C_{da}^i\right)$ correspond à la réponse fournie par le circuit PUF au défi $C_{da}^i$ ;

- $\oplus$ correspond à l'opérateur logique « OU EXCLUSIF » (« XOR » dans la littérature anglo-saxonne).

Dans l'expression des réponses $\alpha_i$ ($1 \le i \le N_d/2$) ci-dessus, il est rappelé que le dispositif à authentifier 10 n'est pas capable de distinguer les défis déclencheurs des défis d'authentification, et se contente de combiner les réponses déterminées pour chaque paire de défis reçus successivement.

Au cours de l'étape S508 de vérification, l'équipement vérificateur 20 procède de manière analogue, en utilisant le modèle PUF tatoué, en calculant pour chaque paire $P_i = \left\{C_{dd}^i, C_{da}^i\right\}$ transmise une réponse $\alpha'_i$ ($1 \le i \le N_d/2$) comme suit :

$$\alpha'_i = R'^{i}_{dd} \oplus R'^{i}_{da}$$

expression dans laquelle :

- $R'^{i}_{dd} = \overline{PUF_W(C_{dd}^i)}$ correspond à l'inverse de la réponse fournie par le modèle PUF tatoué $PUF_W$ au défi $C_{dd}^i$ ;

- $R'^{i}_{da} = PUF_W\left(C_{da}^i\right)$ correspond à la réponse fournie par le modèle PUF tatoué $PUF_W$ au défi $C_{da}^i$ .

Dans ce cas, l'équipement vérificateur 20 peut vérifier l'identité du dispositif à authentifier 10 en comparant les réponses $\alpha_i$ reçues aux réponses $\alpha'_i$ correctes attendues.

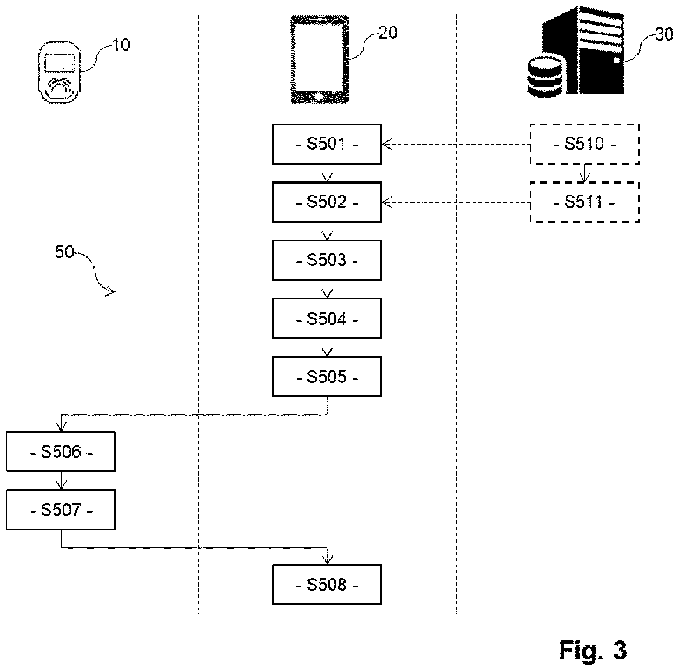

La figure 3 représente schématiquement les principales étapes d'un autre mode préféré de mise en œuvre du procédé 50 d'authentification. Le procédé 50 d'authentification de la figure 3 reprend les étapes décrites en référence à la figure 1, et peut également comporter, de manière optionnelle, l'étape S509 d'obfuscation décrite en référence à la figure 2.

Outre les étapes décrites en référence à la figure 1, le procédé 50 d'authentification de la figure 3 comporte une étape S510 de génération du modèle PUF tatoué par un serveur d'authentification 30. Une fois généré, le modèle PUF tatoué est en outre transmis par le serveur d'authentification 30 à destination de l'équipement vérificateur 20. Cette transmission est de préférence réalisée via un canal de communication, filaire et/ou non filaire, sécurisé. Par « sécurisé », on entend qu'il peut être considéré que les échanges sur ce canal de communication ne peuvent pas être interceptés par un tiers malveillant, et toute méthode de sécurisation connue de l'homme de l'art peut être mise en œuvre.

Suivant un exemple non limitatif, le serveur d'authentification 30 génère le modèle PUF tatoué à partir d'un modèle adapté à simuler de manière précise le comportement du circuit PUF, dit modèle PUF précis.

Tel qu'indiqué précédemment, par « précis », on entend que le modèle PUF précis simule de manière plus précise le comportement du circuit PUF que le modèle PUF tatoué. Par exemple, la précision du modèle PUF précis est égale ou supérieure à 98%, voire égale ou supérieure à 99%. Le modèle PUF précis est typiquement établi par un fabricant du circuit PUF. En effet, le fabricant du circuit PUF dispose initialement dudit circuit PUF, avant que celui-ci ne soit installé dans le dispositif à authentifier 10, de sorte qu'il peut utiliser le circuit PUF pour établir le modèle PUF précis. Par exemple, le modèle PUF précis peut être établi par apprentissage supervisé d'un réseau de neurones (ou tout autre type de modèle d'apprentissage automatique adapté) en utilisant des paires défis-réponses générées en utilisant le circuit PUF.

Dans cet exemple, le serveur d'authentification 30 ne dispose pas du circuit PUF, mais uniquement du modèle PUF précis de ce circuit PUF. Par exemple, le modèle PUF tatoué peut être établi par le serveur d'authentification 30 par apprentissage supervisé en utilisant des paires défis-réponses générées par le serveur d'authentification 30 en utilisant le modèle PUF précis. Comme pour le modèle PUF précis, le modèle PUF tatoué peut être tout type de modèle d'apprentissage automatique adapté. Par exemple, le modèle PUF tatoué comporte un réseau de neurones, de préférence un perceptron multicouches, ou un modèle de régression logistique, etc. L'apprentissage supervisé est par exemple réalisé jusqu'à ce qu'un critère d'arrêt prédéterminé soit vérifié. Par exemple, le critère d'arrêt est considéré comme vérifié lorsqu'un niveau de précision prédéterminé est atteint par le modèle PUF tatoué, par exemple un niveau de précision compris entre 90% et 95% sur un ensemble représentatif de défis possibles différents.

Dans l'exemple non limitatif illustré par la figure 3, le procédé 50 d'authentification comporte également une étape S511 de génération, par le serveur d'authentification 30, des défis déclencheurs. Les défis déclencheurs ainsi générés par le serveur d'authentification 30 sont ensuite transmis à l'équipement vérificateur 20. Etant donné que le serveur d'authentification 30 dispose à la fois du modèle PUF tatoué et du modèle PUF précis (censé modéliser de manière précise le comportement du circuit PUF), il peut facilement déterminer des défis déclencheurs en recherchant des défis pour lesquels le modèle PUF tatoué et le modèle PUF précis donnent des réponses différentes.

Il est à noter que, dans des modes particuliers de mise en œuvre, le serveur d'authentification 30 peut également établir les défis d'authentification, et les transmettre à l'équipement vérificateur 20. Etant donné que le serveur d'authentification 30 dispose à la fois du modèle PUF tatoué et du modèle PUF précis, il peut facilement déterminer des défis d'authentification en recherchant des défis pour lesquels le modèle PUF tatoué et le modèle PUF précis donnent les mêmes réponses. Dans l'exemple non limitatif illustré par la figure 3, il est considéré que les défis d'authentification sont sélectionnés par l'équipement vérificateur 20, au cours de l'étape S503 d'obtention.

Dans des modes préférés de mise en œuvre, le serveur d'authentification 30, lorsqu'il génère les défis déclencheurs, conserve un historique des défis déclencheurs transmis afin de faire varier les défis déclencheurs transmis d'une authentification du dispositif à authentifier 10 à une autre. Par exemple, un tel historique est établi au moyen d'un filtre de Bloom évolutif, considéré comme connu de l'homme de l'art. Si le serveur d'authentification 30 génère également les défis d'authentification, il peut également conserver de manière analogue un historique des défis d'authentification transmis afin de faire varier les défis d'authentification transmis d'une authentification du dispositif à authentifier 10 à une autre.

De manière analogue, indépendamment du fait d'utiliser ou non un serveur d'authentification 30 comme décrit en référence à la figure 3, le dispositif à authentifier 10 peut conserver dans des modes préférés de mise en œuvre un historique des défis reçus, de préférence au moyen d'un filtre de Bloom évolutif, afin de vérifier que des défis différents sont reçus d'une authentification à une autre.

Des modes préférés de mise en œuvre pour la sélection des défis déclencheurs, et des défis d'authentification, sont également décrits ci-après.

Ces modes de mise en œuvre s'inscrivent principalement dans le cas particulier (non limitatif) où le modèle PUF tatoué fournit une valeur de vraisemblance pour chaque réponse prédite à partir d'un défi. En effet, dans le cas notamment où le modèle PUF tatoué est obtenu par apprentissage supervisé, celui-ci peut fournir une valeur de vraisemblance (« likelihood » dans la littérature anglo-saxonne) représentative d'un niveau de conviction du modèle PUF tatoué de fournir la même réponse que le circuit PUF.

Dans le cas d'un circuit PUF, les réponses sont binaires par exemple 0 ou 1. La sortie du modèle PUF tatoué est par exemple une valeur « souple » qui est un nombre réel compris entre 0 et 1, et la réponse fournie peut être obtenue en arrondissant cette valeur « souple » au nombre entier le plus proche. Cette valeur « souple » correspond à une valeur de vraisemblance dans la mesure où une réponse égale à 1 déterminée en arrondissant au nombre entier le plus proche est plus vraisemblable si la valeur « souple » est 0.9 que si la valeur « souple » est 0.6.

En partant du principe qu'un tiers malveillant pourrait avoir accès à une copie du modèle PUF tatoué, chaque défi déclencheur est, dans des modes préférés de mise en œuvre, un défi dont la valeur de vraisemblance de la réponse vérifie un critère de vraisemblance prédéterminé.

Le critère de vraisemblance vise principalement à empêcher un tiers malveillant de pouvoir identifier les défis déclencheurs en analysant les valeurs de vraisemblance fournies par la copie du modèle PUF tatoué.

Selon un premier exemple de mise en œuvre, il est avantageux de sélectionner des défis déclencheurs pour lesquels la valeurs de vraisemblance indiquent un niveau de conviction élevé de la part du modèle PUF tatoué. Puisqu'un défi déclencheur est par construction un défi pour lequel le modèle PUF tatoué fournit une réponse erronée, il est avantageux que cette réponse erronée soit néanmoins considérée comme vraisemblable par le modèle PUF tatoué. En d'autres termes, il faut que le modèle PUF tatoué se trompe avec conviction. En effet, étant donné que le modèle PUF tatoué se trompe pour les défis déclencheurs, un choix arbitraire de ceux-ci pourrait conduire à ne sélectionner que des défis déclencheurs pour lesquels les réponses fournies par le modèle PUF tatoué sont considérées comme peu vraisemblables. Un tiers malveillant pourrait alors détecter que certains défis transmis par l'équipement vérificateur 20, lorsqu'appliqués à la copie du modèle PUF tatoué, donnent des réponses jugées peu vraisemblables et pourrait en déduire qu'il s'agit de défis déclencheurs.

Dans le cas décrit ci-avant où le modèle PUF tatoué fournit une valeur « souple » comprise entre 0 et 1, une façon simple de sélectionner les défis déclencheurs peut consister à ne sélectionner que des défis pour lesquels le modèle PUF tatoué fournit une réponse erronée et pour lesquels les valeurs « souples » ne sont pas comprises dans l'intervalle [0.4,0.6], voire ne sont pas comprises dans l'intervalle [0.3,0.7]. Dans cet exemple particulièrement simple, le critère de vraisemblance est donc vérifié si les valeurs « souples » ne sont pas comprises dans l'intervalle [0.4,0.6], voire ne sont pas comprises dans l'intervalle [0.3,0.7]. Toutefois, d'autres types de critères de vraisemblance peuvent également être mis en œuvre, alternativement et/ou en complément.

Dans le critère de vraisemblance, il est également possible de prendre en compte les valeurs de vraisemblance fournies par le modèle PUF précis. En effet, comme le modèle PUF tatoué, le modèle PUF précis peut également fournir une valeur de vraisemblance représentative d'un niveau de conviction du modèle PUF précis de fournir la même réponse que le circuit PUF. En effet, le modèle PUF précis n'est pas nécessairement complètement fidèle au circuit PUF. Dans un tel cas, il est avantageux de sélectionner des défis déclencheurs pour lesquels le modèle PUF tatoué se trompe avec une forte probabilité. Pour cela, il faut tout d'abord que la réponse fournie par le modèle PUF précis soit vraisemblable, c'est-à-dire considérée comme correcte avec une forte probabilité. En outre, pour les raisons données ci-avant, il est également avantageux que le modèle PUF tatoué se trompe avec conviction.

Par conséquent, dans des modes préférés de mise en œuvre, l'évaluation du critère de vraisemblance pour la valeur de vraisemblance fournie par le modèle PUF tatoué en réponse à un défi comporte une comparaison de ladite valeur de vraisemblance avec une valeur de vraisemblance fournie par le modèle PUF précis en réponse au même défi. On décrit ci-après un exemple non limitatif d'évaluation de critère de vraisemblance comportant une telle comparaison.

De manière générale, les défis déclencheurs sont sélectionnés en effectuant une recherche sur l'ensemble des défis. Pour un défi donné C pour lequel on cherche à déterminer s'il peut être sélectionné comme défi déclencheur, il est par exemple possible d'appliquer les étapes suivantes. Tout d'abord, les réponses et les valeurs de vraisemblance sont déterminées en utilisant le modèle PUF tatoué et le modèle PUF précis :

[Math. 2]

$$\begin{aligned} likelihood(R_W) &= PUF_W(C) \\ R_W &= round\big(likelihood(R_W)\big) \\ likelihood(R_{GT}) &= PUF_{GT}(C) \\ R_{GT} &= round\big(likelihood(R_{GT})\big) \end{aligned}$$

expression dans laquelle :

- $likelihood(R_W)$ correspond à la valeur « souple » définie ci-dessus, ou valeur de vraisemblance, fournie par le modèle PUF tatoué $PUF_W$ en réponse au défi C, et $R_W$ correspond à la réponse binaire associée, obtenue en arrondissant la valeur « souple » au nombre entier le plus proche (fonction *round*) ;
- $likelihood(R_{GT})$ correspond à la valeur « souple » définie ci-dessus, ou valeur de vraisemblance, fournie par le modèle PUF précis $PUF_{GT}$ en réponse au défi C, et $R_{GT}$ correspond à la réponse binaire associée, obtenue en arrondissant la valeur « souple » au nombre entier le plus proche (fonction *round*).

Ensuite les valeurs de vraisemblance peuvent être comparées en calculant un nombre réel M comme suit :

[Math. 3]

$$\begin{aligned} M_{GT} &= |R_W - likelihood(R_{GT})| \\ M_W &= |R_W - likelihood(R_W)| \\ M &= |M_{GT} - M_W| \end{aligned}$$

Ensuite, le critère de vraisemblance peut être considéré comme vérifié si le nombre *M* est supérieur à une valeur seuil $D_W$ positive prédéterminée, par exemple comprise entre 0.65 et 0.85. Il est à noter que, si la valeur seuil $D_W$ est égale ou supérieure à 0.5, alors cela signifie que la réponse $R_W$ fournie par le modèle PUF tatoué au défi C est nécessairement différente de la réponse $R_{GT}$ fournie pour ce même défi par le modèle PUF précis. Il est cependant à noter qu'il est également possible de considérer une valeur seuil $D_W$ inférieure à 0.5, par exemple pour rechercher plus rapidement les défis déclencheurs à utiliser. Le cas échéant, il convient de vérifier en outre que $R_W \neq R_{GT}$. Si le défi C est tel que $R_W \neq R_{GT}$ et tel que $M > D_W$, alors il peut être sélectionné comme défi déclencheur.

Rien n'exclut cependant, suivant d'autres exemples, de considérer d'autres types de critères de vraisemblance, alternativement et/ou en complément. Notamment, le critère de vraisemblance peut être vérifié si $M > D_W$ et si en outre les valeurs de vraisemblance des défis déclencheurs sont réparties dans un ou plusieurs intervalles prédéterminés. Par exemple, en considérant que les valeurs de vraisemblance correspondent aux valeurs « souples » définies précédemment, alors il est possible de choisir des valeurs de vraisemblance réparties dans l'intervalle [0.6,0.8] (ou encore [0.65,0.85]) si la réponse $R_W$ est égale à 1, ou dans l'intervalle [0.2,0.4] (ou encore [0.15,0.35]) si la réponse $R_W$ est 0. Le but ici est d'éviter que les valeurs de vraisemblance des défis déclencheurs ne soient regroupées dans des plages trop étroites (par exemple de largeur inférieure à 0.1), et toute méthode permettant d'éviter d'avoir des valeurs de vraisemblance trop regroupées peut être mise en œuvre.

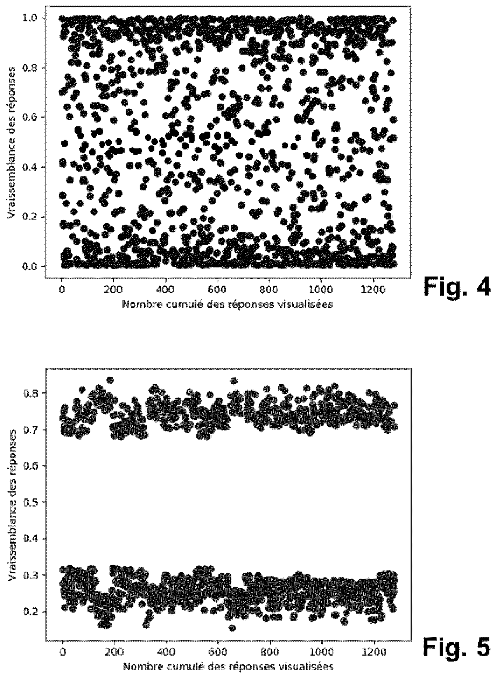

La figure 4 représente schématiquement les valeurs de vraisemblance (valeurs « souples ») obtenues avec un modèle PUF tatoué pour des tirages aléatoires successifs d'une pluralité de défis. Tel qu'illustré par la figure 4, les valeurs de vraisemblance sont distribuées de manière non uniforme entre 0 et 1. Dans cet exemple, le modèle PUF tatoué a une précision de l'ordre de 93%, et on comprend donc que la plupart des défis dont les valeurs de vraisemblance sont représentées sur la figure 4 sont des défis pour lesquels le modèle PUF tatoué donne le même résultat que le modèle PUF précis.

La figure 5 représente schématiquement les valeurs de vraisemblance (valeurs « souples ») de défis déclencheurs sélectionnés en utilisant un critère de vraisemblance tel que décrit ci-avant, à savoir vérifié si $M > D_W$ et en évitant que les valeurs de vraisemblance ne soient trop regroupées (dans cet exemple, réparties dans [0.65,0.85] si la réponse $R_W$ est égale à 1, ou dans l'intervalle [0.15,0.35] si la réponse $R_W$ est 0).

En comparant les figures 4 et 5, on comprend que la distribution des valeurs de vraisemblance des défis déclencheurs (figure 5) est sensiblement différente de celles de l'ensemble des défis (figure 4). Par conséquent, il peut être avantageux de ne pas sélectionner les défis d'authentification de façon arbitraire, car sinon la distribution des valeurs de vraisemblance des défis d'authentification pourrait être très différente de celle des valeurs de vraisemblance des défis déclencheurs, ce qui pourrait être utilisé pour distinguer les défis d'authentification et les défis déclencheurs.

Dans des modes préférés de mise en œuvre, les défis d'authentification peuvent être sélectionnés en fonction d'une distribution des valeurs de vraisemblance des réponses des défis déclencheurs. Ainsi, les défis d'authentification peuvent être sélectionnés de sorte à avoir des réponses dont les valeurs de vraisemblance présentent sensiblement la même distribution que celles des réponses des défis déclencheurs.

Par exemple, si les défis déclencheurs ont été sélectionnées pour avoir des valeurs de vraisemblance comprises dans des intervalles prédéterminés, les défis d'authentification peuvent également être sélectionnés pour avoir des valeurs de vraisemblance dans les mêmes intervalles prédéterminés. Par exemple, en considérant que les valeurs de vraisemblance correspondent aux valeurs « souples » définies précédemment, alors il est possible de choisir des défis d'authentification dont les valeurs de vraisemblance sont réparties dans l'intervalle [0.6,0.8] (ou encore [0.65,0.85]) si la réponse $R_W$ est égale à 1, ou dans l'intervalle [0.2,0.4] (ou encore [0.15,0.35]) si la réponse $R_W$ est 0.

Si c'est l'équipement vérificateur 20 qui sélectionne les défis d'authentification, il peut par exemple recevoir du serveur d'authentification 30 des informations sur les bornes des intervalles prédéterminés considérés pour générer les défis déclencheurs. Suivant un autre exemple, l'équipement vérificateur 20 peut déterminer des bornes d'intervalles à partir des défis déclencheurs reçus. Pour chaque défi déclencheur reçu, l'équipement vérificateur 20 peut utiliser le modèle PUF tatoué pour déterminer la valeur de vraisemblance associée, et en déduire les bornes d'intervalles associés. Par exemple, en considérant que les valeurs de vraisemblance correspondent aux valeurs « souples » définies précédemment, alors l'équipement vérificateur 20 peut déterminer :

- des bornes $V1_{min}$ et $V1_{max}$ correspondant respectivement à la valeur minimale et à la valeur maximale des valeurs de vraisemblance déterminées pour les défis déclencheurs dont la réponse $R_W$ est égale à 1,
- des bornes $V0_{min}$ et $V0_{max}$ correspondant respectivement à la valeur minimale et à la valeur maximale des valeurs de vraisemblance déterminées pour les défis déclencheurs dont la réponse $R_W$ est égale à 0.

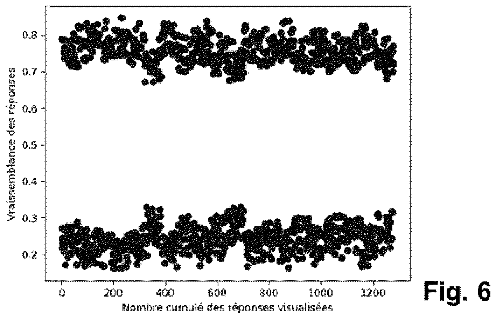

Ensuite, l'équipement vérificateur 20 peut faire une recherche de défis d'authentification dont les valeurs de vraisemblance sont réparties dans les intervalles $[V1_{min}, V1_{max}]$ et $[V0_{min}, V0_{max}]$. La figure 6 représente schématiquement les valeurs de vraisemblance (valeurs « souples ») de défis d'authentification sélectionnés en utilisant des intervalles dont les bornes ont été déterminées à partir de valeurs de vraisemblance des défis déclencheurs de la figure 5. On constate que les distributions des valeurs de vraisemblance des défis déclencheurs et des défis d'authentification sont similaires, de sorte que les valeurs de vraisemblance ne peuvent pas être utilisées pour distinguer les défis déclencheurs et les défis d'authentification.

De manière plus générale, il est à noter que les modes de mise en œuvre et de réalisation considérés ci-dessus ont été décrits à titre d'exemples non limitatifs, et que d'autres variantes sont par conséquent envisageables.

## Revendications

1. Procédé (50) d'authentification d'un dispositif à authentifier (10) par un équipement vérificateur (20), ledit dispositif à authentifier comportant un circuit électronique réalisant une fonction physique non reproductible, dit circuit PUF, ledit circuit PUF étant configuré pour recevoir en entrée un défi et à fournir en sortie une réponse au défi reçu en entrée, ledit procédé étant **caractérisé en ce qu'**il comporte des étapes de :

   - (S501) obtention, par l'équipement vérificateur, d'un modèle adapté à simuler de manière approximative le comportement du circuit PUF, dit modèle PUF tatoué,

- (S502) obtention, par l'équipement vérificateur, de défis, dits défis déclencheurs, pour lesquels le modèle PUF tatoué fournit des réponses différentes des réponses fournies par le circuit PUF,

- (S503) obtention, par l'équipement vérificateur, de défis, dits défis d'authentification, pour lesquels le modèle PUF tatoué fournit les mêmes réponses que le circuit PUF,

- (S504) sélection, par l'équipement vérificateur, d'un ordre d'envoi des défis déclencheurs et des défis d'authentification,

- (S505) transmission, par l'équipement vérificateur à destination du dispositif à authentifier, des défis déclencheurs et des défis d'authentification selon l'ordre d'envoi sélectionné,

- (S506) génération, par le circuit PUF du dispositif à authentifier, de réponses pour chaque défi reçu de l'équipement vérificateur,

- (S507) transmission, par le dispositif à authentifier, des réponses générées à destination de l'équipement vérificateur,

- (S508) vérification, par l'équipement vérificateur, de l'identité du dispositif à authentifier en fonction des réponses reçues, du modèle PUF tatoué, des défis déclencheurs, des défis d'authentification et de l'ordre d'envoi.

2. Procédé (50) d'authentification selon la revendication 1, dans lequel un serveur d'authentification (30) transmet le modèle PUF tatoué à l'équipement vérificateur, le modèle PUF tatoué étant généré à partir d'un modèle adapté à simuler le comportement du circuit PUF de manière plus précise que le modèle PUF tatoué, dit modèle PUF précis.

3. Procédé (50) selon la revendication 2 dans lequel le modèle PUF tatoué est généré par apprentissage supervisé à partir de paires défi-réponse générées en utilisant le modèle PUF précis.

4. Procédé (50) d'authentification selon l'une quelconque des revendications 2 à 3, dans lequel le serveur d'authentification (30) transmet les défis déclencheurs à l'équipement vérificateur (20).

5. Procédé (50) d'authentification selon la revendication 4, dans lequel le serveur d'authentification (30) conserve un historique des défis déclencheurs transmis, de préférence au moyen d'un filtre de Bloom évolutif, afin de faire varier les défis déclencheurs transmis d'une authentification du dispositif à authentifier à une autre.

6. Procédé (50) d'authentification selon l'une quelconque des revendications précédentes, dans lequel le modèle PUF tatoué fournit une valeur de vraisemblance pour chaque réponse prédite à partir d'un défi, et dans lequel chaque défi déclencheur est un défi dont la valeur de vraisemblance de la réponse vérifie un critère de vraisemblance prédéterminé.

7. Procédé (50) d'authentification selon la revendication 6, dans lequel l'évaluation du critère de vraisemblance pour la valeur de vraisemblance fournie par le modèle PUF tatoué en réponse à un défi comporte une comparaison de ladite valeur de vraisemblance avec une valeur de vraisemblance fournie par le modèle PUF précis en réponse au même défi.

8. Procédé (50) d'authentification selon l'une quelconque des revendications 6 à 7, dans lequel les défis d'authentification sont sélectionnés en fonction d'une distribution des valeurs de vraisemblance des réponses des défis déclencheurs.

9. Procédé (50) selon l'une quelconque des revendications précédentes, dans lequel l'ordre d'envoi est tel que les défis transmis sont groupés en paires, chaque paire de défis transmis comportant un défi déclencheur et un défi d'authentification, l'ordre d'envoi du défi déclencheur et du défi d'authentification de chaque paire étant sélectionné de manière aléatoire d'une paire à une autre.

10. Procédé (50) selon l'une quelconque des revendications précédentes, comportant une étape (S509) d'obfuscation, par le dispositif à authentifier, des réponses générées transmises à l'équipement vérificateur.

11. Procédé (50) selon la revendication 10, dans lequel l'obfuscation consiste à regrouper les défis reçus en paires successives, et à combiner les réponses générées pour chaque paire de défis reçus au moyen d'un opérateur logique de type « OU EXCLUSIF ».

12. Procédé (50) d'authentification selon l'une quelconque des revendications précédentes, dans lequel le dispositif à authentifier conserve un historique des défis reçus, de préférence au moyen d'un filtre de Bloom évolutif, afin de vérifier que des défis différents sont reçus d'une authentification à une autre.

13. Equipement vérificateur (20) pour l'authentification d'un dispositif à authentifier, ledit dispositif à authentifier comportant un circuit électronique réalisant une fonction physique non reproductible, dit circuit PUF, ledit circuit PUF étant configuré pour recevoir en entrée un défi et à fournir en sortie une réponse au défi reçu en entrée, ledit équipement vérificateur étant **caractérisé en ce qu'**il comporte un circuit de traitement configuré pour :

- obtenir un modèle adapté à simuler de manière approximative le comportement du circuit PUF, dit modèle PUF tatoué,
- obtenir des défis, dits défis déclencheurs, pour lesquels le modèle PUF tatoué fournit des réponses différentes des réponses fournies par le circuit PUF,
- obtenir des défis, dits défis d'authentification, pour lesquels le modèle PUF tatoué fournit les mêmes réponses que le circuit PUF,
- sélectionner un ordre d'envoi des défis déclencheurs et des défis d'authentification,
- transmettre à destination du dispositif à authentifier les défis déclencheurs et les défis d'authentification selon l'ordre d'envoi sélectionné,
- vérifier l'identité du dispositif à authentifier en fonction des réponses reçues du dispositif à authentifier, du modèle PUF tatoué, des défis déclencheurs, des défis d'authentification et de l'ordre d'envoi.

14. Système d'authentification comportant :

- un dispositif à authentifier (10) comportant un circuit électronique réalisant une fonction physique non reproductible, dit circuit PUF, ledit circuit PUF étant configuré pour recevoir en entrée un défi et à fournir en sortie une réponse au défi reçu en entrée,
- un équipement vérificateur (20) selon la revendication 13.

15. Système d'authentification selon la revendication 14, comportant un serveur d'authentification (30) configuré pour générer le modèle PUF tatoué à partir d'un modèle adapté à simuler le comportement du circuit PUF de manière plus précise que le modèle PUF tatoué, dit modèle PUF précis, et pour transmettre le modèle PUF tatoué à l'équipement vérificateur.

10

20

50

- S501 -

- S502 -

- S503 -

- S504 -

- S505 -

- S506 -

- S507 -

- S508 -

**Fig. 1**

10

20

50

- S501 -

- S502 -

- S503 -

- S504 -

- S505 -

- S506 -

- S509 -

- S507 -

- S508 -

**Fig. 2**

Fig. 3

Fig. 4

Fig. 5

Fig. 6

**Europäisches Patentamt**
**European Patent Office**
**Office européen des brevets**

# RAPPORT DE RECHERCHE EUROPEENNE

Numéro de la demande

EP 22 18 1696

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GU CHONGYAN ET AL: "A Modeling Attack Resistant Deception Technique for Securing Lightweight-PUF-Based Authentication", IEEE TRANSACTIONS ON COMPUTER-AIDED DESIGN OF INTEGRATED CIRCUITS AND SYSTEMS, IEEE, USA, vol. 40, no. 6, 10 novembre 2020 (2020-11-10), pages 1183-1196, XP011855564, ISSN: 0278-0070, DOI: 10.1109/TCAD.2020.3036807 [extrait le 2021-05-19] * abrégé * * Chapitre I: "Introduction" * * Chapitre IV: "Proposed Deception Protocol" * ----- | 1-15 | INV. H04L9/32 |
| A | US 2009/083833 A1 (ZIOLA THOMAS [US] ET AL) 26 mars 2009 (2009-03-26) * abrégé * * alinéas [0005] - [0035] * ----- | 1-15 | |
| | | | DOMAINES TECHNIQUES RECHERCHES (IPC) |
| A | CN 105 760 786 A (INST COMPUTING TECH CAS) 13 juillet 2016 (2016-07-13) * abrégé * * "Background Technology" * * "Summary of the Invention" * ----- | 1-15 | H04L |

Le présent rapport a été établi pour toutes les revendications

| Lieu de la recherche | Date d'achèvement de la recherche | Examinateur |
|---|---|---|
| Munich | 12 septembre 2022 | Di Felice, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 22 18 1696

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-09-2022

| Document brevet cité au rapport de recherche | Date de publication | Membre(s) de la famille de brevet(s) | Date de publication |
|---|---|---|---|
| US 2009083833 A1 | 26-03-2009 | AT 544123 T | 15-02-2012 |
| | | CN 101542496 A | 23-09-2009 |
| | | EP 2214117 A2 | 04-08-2010 |
| | | HK 1134359 A1 | 23-04-2010 |
| | | US 2009083833 A1 | 26-03-2009 |
| | | WO 2009079050 A2 | 25-06-2009 |
| CN 105760786 A | 13-07-2016 | AUCUN | |

EPO FORM P0460

Pour tout renseignement concernant cette annexe : voir Journal Officiel de l'Office européen des brevets, No.12/82